# EUROPEAN PATENT SPECIFICATION

(11) **EP 1 577 481 B1**
(45) Date of publication and mention of the grant of the patent: **19.01.2011**
(21) Application number: 05075628.7
(22) Date of filing: 16.03.2005
(51) Int. Cl.: E06B 3/54, B32B 17/10

(54) **Stratified flat element with intermediate layer extended and folded beyond at least one perimetral edge of the said flat element**
Flaches Schichtelement mit Zwischenlage, die zumindest eine Kante des Schichtelements überragt und umgefaltet ist
Elément stratifié avec couche intermédiaire en saillie et pliée sur un bord dudit élément

(30) Priority: 19.03.2004 IT MI20040534
(43) Date of publication of application: 21.09.2005
(73) Proprietor: Coopsette S.c.ar.l., Castelnovo Sotto (RE) (IT)
(72) Inventor: Frambati, Fabio, 43013 Langhirano (PR) (IT); Carfagni Royer, Gianni, 55100 Lucca (IT)
(74) Representative: Raimondi, Margherita

(56) References cited:
- EP-A- 0 974 451
- WO-A-00/64670
- US-A- 5 778 629
- US-A- 5 960 606

## Description

The present invention relates to a stratified flat element in particular for closing surfaces of buildings and the like.

It is known in the building sector that there exists a need to provide external closing surfaces for a building, resulting in the maximum transparency thereof, by means of the application of continuous structural glazed elements, whereby it is attempted increase the dimensions of the individual glass modules and minimize the visual impact of the structures supporting said modules.

It is also known that, for this purpose, use is made of stratified glass panels which are applied to the fixed structures of the building by means of pin-like components such as through-studs and threaded bosses which, although being very reliable, by passing through the glass give rise, however, to thermal continuity and reduce the sealing effect against water and air leaks. The documents WO 0064670 and EP 0,974,451 also disclose stratified glass panels which are formed by two transparent sheets which are glued to an internal layer of polymer material which is extended beyond the edge of the two glass panels so as to allow gripping by corresponding devices to be constrained to the fixed parts of the building.

Although fulfilling their function, these known glass elements nevertheless require the use of devices which, however, remain visible on the external surface of the facade, causing discontinuity in the aesthetic appearance thereof, as well as thermal continuity, leaks and an increase in the deterioration and wear of the various component parts.

Examples of the prior art according to the precharacterizing part of claim 1 are disclosed in US-5,778,629.

The technical problem which is posed, therefore, is that of providing stratified glass elements able to be constrained to fixed structures of buildings and the like without parts which remain visible on the external surface of the said glazed element.

Within the context of this problem it is also required that said glass elements should be able to be obtained using industrial, methods, handled safely and easily for transportation and assembly and have a high residual strength in the event of breakage of the glass element once fitted.

These results are achieved according to the present invention by a stratified flat element according to the characteristics of claim 1.

Further details may be obtained from the following description of a non-limiting example of embodiment of the subject of the present invention provided with reference to the accompanying drawings in which:
- Figure 1 shows a perspective view of a façade of a building with glazed elements according to the present invention;
- Figure 2 shows a partial schematic cross-section through a glass element according to the invention;
- Figure 3 shows a partial schematic cross-section through a pair of glass elements engaged with gripping devices for securing thereof;

- Figure 4 shows a partial schematic cross-section through a pair of glass elements engaged with gripping devices constrained to the fixed parts of a building;
- Figure 5 shows a variation of an example of embodiment of the glass element according to Figure 1 and the corresponding gripping devices;
- Figure 6 shows a partial schematic cross-section through a further variation of an example of embodiment of the glass element according to Figure 1 and the corresponding gripping devices;
- Figure 7 shows a partial cross-section through a further variation of an example of embodiment of the glass element according to Figure 1 and the corresponding gripping devices;
- Figure 8 shows a partial schematic cross-section through a further variation of an example of embodiment of the glass element according to Figure 1 and the corresponding gripping devices;
- Figure 9 shows a partial schematic cross-section through a pair of glass elements engaged by means of a further embodiment of the gripping devices constrained to the fixed parts of a building; and
- Figure 10 shows a further example of embodiment of the gripping devices for constraining to fixed parts in the form of a cable.

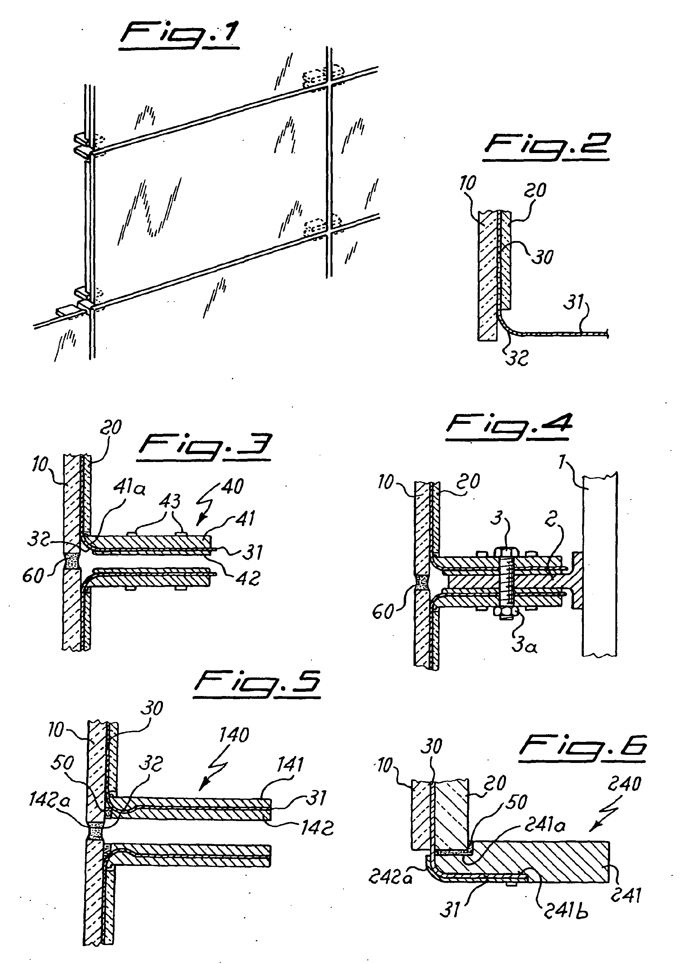

As illustrated in Figures 1 and 2, a stratified glass element according to the present invention is composed essentially of a first transparent sheet of glass 10, conventionally defined as external, and a second sheet of glass 20, conventionally defined as internal, which are joined together by means of the positioning, in between, of an intermediate layer 30 of polymer material, for example of the ion plastic type, having optimum mechanical properties, in particular with regard to the instantaneous modulus of elasticity and the breakage strength.

Said intermediate layer 30 is extended beyond the perimetral edge of the external sheet 10 and folded at a suitable angle inwards along a section 31 of suitable length.

The angle of curvature, relative to the surface of the glass element, of said folded section 31 of the intermediate layer 30 is between 20° and 130° with a minimum radius of curvature of 1.5 mm.

According to preferred embodiments, said angle of curvature will be preferably between 80° and 105° and the radius of curvature between 4 and 20 mm.

In order to allow passing-through and folding of the intermediate layer 30, the rear sheet 20 of the stratified glass element has a dimension smaller than the corresponding dimension of the external sheet 10. In a further embodiment, not shown, it is envisaged moreover that said rear sheet 20 may have dimensions the same as those of the front sheet 10 and may be provided with interruptions able to allow passing-through of the intermediate layer 30.

Figure 3 shows a section of the façade in which two glass elements according to the present invention are arranged adjacent, with the joint between them sealed by means of mastic 60 of the compatible silicone-based type or equivalent material; Fig. 3 shows moreover the means 40 for gripping the section 31 of the intermediate layer 30 projecting inwards and, in the example, formed by two jaws 41,42 which grip said projecting section 31 by screw means 43 or the like.

It is envisaged, moreover, that the polymer material of the intermediate layer facilitates joining to the gripping means 40 following a heating and pressurisation treatment which activates the relative adhesion between the former and latter, increasing the strength of the joint.

In the example according to Figure 3, the first jaw 41 extends towards the glass element along a section greater than that of the second jaw 42 and has a convex section 41a corresponding to the curvature 32 of the extended section 31, with which it combines in order to confer rigidity to the assembly.

Figure 4 shows, moreover, an example of embodiment of the system for securing the glazed elements according to Figure 3 to a flange 2 integral with a fixed upright 1 of the building, said securing action being obtained by means of screw/female thread means 3/3a.

Figure 5 shows a variation of embodiment of the means 140 for gripping the projecting section 31 of the intermediate layer 30; said gripping means 140 also consist in this case of jaws 141;142 where the second jaw 142 extends towards the glass element so as to form a cavity inside which a seal 50 of soft material is housed so as to avoid direct contact between glass and metal.

Said second jaw 142 also has, along the section corresponding to the curvature 32, a concave seat 142a for adaptation to the said curvature 32 of the projecting section 31 of the intermediate layer 30. Figures 6 to 9 show further examples of embodiment of the glass element according to the present invention and the associated gripping devices.

In greater detail, Figure 6 shows gripping devices 240 which in this case consist of a first jaw 241 which has a first seat 241a for housing the second internal sheet of glass 20 and, on the opposite side, a second seat 241b suitable for engagement with the second jaw 242a so as to allow clamping, by screw-type means or the like, of the intermediate layer 30 of the stratified glass element.

Conveniently, the dimensions of the first seat 241a are such as to allow the positioning of a stop 50 between glass and jaw.

Figure 6 shows the external glass sheet 10 and internal glass sheet 20 which have the same length, and the second jaw 242a is correspondingly extended towards the outside of the first jaw with a rounded form.

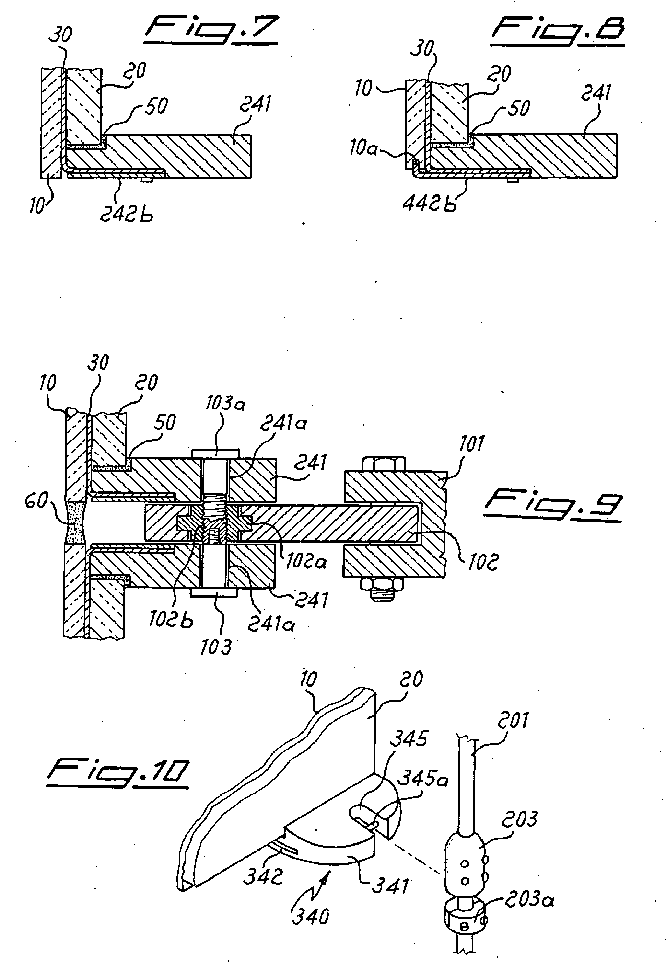

In Figure 7, on the other hand, the external sheet 10 is longer than the internal sheet 20 and the second jaw 242b is correspondingly cut with a length substantially the same as that of the first jaw 241.

In the case of Fig. 8 the long arm of the L is extended so that the short arm is arranged inside a suitable seat 10a of the sheet 10, so that the sheet 10 is retained also in the direction perpendicular to its plane.

In this case also soft material 50 is arranged between the glass sheet and the metal jaw.

Figure 9 shows a further variation of embodiment of the means for securing the glazed elements to a flange 102 integral with a fixed upright 101; said securing action is obtained by means of an insert 102a of the said flange 102, which insert has a through-hole with a female thread 102b coaxial with corresponding through-holes 241a in the respective jaws 241; said female thread 102b is suitable for mating with a corresponding thread on a first bolt 103a, the head of which rests on the first jaw 241 and the shank of which has internally a female thread suitable for mating with the threaded shank of a second bolt 103, which is situated opposite to the first bolt and the head of which rests on the respective first jaw 241 of the second glass element.

It is therefore obvious how with the glass element according to the invention it is possible to impart a high degree of continuity to the external glass surface which will be secured to the fixed structure without metal elements passing through the external surface of the glass, achieving, in addition to an improved aesthetic appearance, also a greater durability of the assembly since the securing device is protected from external agents.

In addition to this, the glass element according to the present invention results in an improved versatility from an applicational point of view, allowing the formation of surfaces with any form and able to be associated with the most varying types of support structure, imparting moreover to the glass a high residual strength following possible breakage of the said glass.

It is envisaged moreover that many variations may be introduced as regards the practical embodiment of the individual elements; hence, for example, the means for constraining to the fixed structure may be of the pin type arranged in the vicinity of the corners of the glass element or continuous and extending along at least two opposite edges of the stratified glass element; likewise the fixing means may be joined to structures both of the rigid type, such as frames made of steel, reinforced concrete, wood or glass, and of the deformable type, such as tensile structures, and/or cables, as for example shown in Figure 10 where the fixed mounting element is precisely a cable 201 having, mounted thereon, a cable-tensioning device 203,203a able to be arranged on opposite sides of the devices 340 for gripping the stratified glass; said gripping devices 340 also comprise a first jaw 341 and a second jaw 342; the first jaw 341 conveniently has a seat 345 able to allow the entry of the cable 201 and retaining means 345a able to prevent the gripping devices 340 from escaping in the transverse direction.

It is envisaged moreover that the stratified flat sheet may be of the blind and/or semi-transparent type for forming panels for closing openings and/or particular aesthetic effects.

## Claims

1. Stratified flat element comprising an external sheet (10) and an internal sheet (20) joined together by means of an intermediate layer (30), said intermediate layer (30) is extended beyond at least one of the perimetral edges of the flat element and folded inwards over a section (31) of suitable length **characterized in that** it comprises devices (40;140;240;340) for gripping the folded section (31) of the intermediate layer (30) and **in that** said gripping devices lay internally relative to the external glass surface of said external sheet (10).

2. Flat element according to Claim 1, **characterized in that** said intermediate layer consists of polymer material.

3. Flat element according to Claim 1, **characterized in that** said intermediate layer (30) is extended beyond at least two perimetral edges of the flat element.

4. Flat element according to Claim 3, **characterized in that** said two perimetral edges are opposite to each other.

5. Flat element according to Claim 3, **characterized in that** said two perimetral edges are adjacent to each other.

6. Flat element according to Claim 1, **characterized in that** the internal sheet (20) has a dimension smaller than that of the external sheet (10) at least in the position where the intermediate layer (30) is extended and folded.

7. Flat element according to Claim 1, **characterized in that** the internal sheet (20) has interruptions able to allow passing-through and folding of the intermediate layer (30).

8. Flat element according to Claim 1, **characterized in that** said extended or folded section (31) of the intermediate layer (30) is folded inwards at an angle of between 20° and 130°.

9. Flat element according to Claim 8, **characterized in that** said angle of curvature is preferably between 80° and 105°.

10. Flat element according to Claim 1, **characterized in that** the minimum radius of curvature of the extended and folded section (31) is 1.5 mm.

11. Flat element according to Claim 10, **characterized in that** the radius of curvature is preferably between 4 and 20 mm.

12. Flat element according to Claim 1, **characterized in that** said gripping devices (40;140;240;340) consist of a pair of jaws (41,42;141,142,142;241,242a,242b;241, 442b;241,341,342) at least one of which extends as far as the flat element.

13. Flat element according to Claim 12, **characterized in that** said jaw (41;141) extending as far as the flat element has a convex section (41a) with a curvature corresponding to that (32) of the projecting section (31) of the intermediate layer (30).

14. Flat element according to Claim 12, **characterized in that** one (42) of the two jaws (41,42) of, the pair has dimensions smaller than those of the first jaw (41).

15. Flat element according to Claim 12, **characterized in that** said jaw (41;141) extending as far as the flat element has a first seat (241a) for housing the second internal sheet of glass (20) and, on the opposite side, a second seat (241b) suitable for engagement with the second jaw (242a) so as to clamp the intermediate layer (30) of the stratified glass.

16. Flat element according to Claim 15, **characterized in that** the second jaw (242a) is extended with a rounded form beyond the edge of the first jaw.

17. Flat element according to Claim 15, **characterized in that** the second jaw (242b) has a length substantially the same as that of the first jaw (241).

18. Flat element according to Claim 12, **characterized in that** the second jaw (142) of the pair is extended towards the flat element and has a concave seat (142a) for adaptation to the said curvature (32) of the projecting section (31) of the intermediate layer (30).

19. Flat element according to Claim 12, **characterized in that** the second jaw (442b;) of the pair has the shape of an L.

20. Flat element according to Claim 19, **characterized in that** the long arm of the L is extended so that the short arm is arranged inside a suitable seat (10a) of the sheet (10).

21. Flat element according to Claim 19, **characterized in that** the long arm of the L is extended so that the short arm is arranged beyond the sheet (10).

22. Flat element according to Claim 12, **characterized in that** the second jaw (142) is extended towards the flat element so as to form a gap inside which a seal (50) is housed.

23. Flat element according to Claim 1, **characterized in that** said gripping elements have through-holes suitable for engagement with corresponding means (3,3a;103,103a) for constraining to corresponding fixed support parts.

24. Flat element according to Claim 23, **characterized in that** said through-holes are formed on the first jaw of the pair.

25. Flat element according to 23, **characterized in that** said constraining means consist of a bolt (3) and a nut (3a).

26. Flat element according to Claim 23, **characterized in that** said constraining means consist of a first bolt (103a) having, formed on its shank, a thread and a female thread suitable for mating with the threaded shank of a second bolt (103) situated opposite the first bolt.

27. Flat element according to Claim 26, **characterized in that** said thread is suitable for mating with the female thread (102b) of an insert (102a) integral with the fixed means (102) for supporting the flat element.

28. Flat element according to Claim 24, **characterized in that** said through-hole (345) is open in the longitudinal direction towards the support structure and is associated with corresponding means (345a) for closing the opening.

29. Flat element according to Claim 1, **characterized in that** the joint between the extended and folded section (31) of the intermediate layer (30) and the said gripping means (40) is performed by means of adhesion of the former to the latter.

30. Flat element according to Claim 1, **characterized in that** said sheets (10,20) are transparent.

31. Flat element according to Claim 1, **characterized in that** at least one of said sheets (10,20) is opaque.

32. Use of the flat element according to claim 1 as a covering for surfaces of buildings

## Patentansprüche

1. Geschichtetes flaches Element umfassend eine äussere Platte (10) und eine innere Platte (20), die mittels einer Zwischenschicht (30) zusammen verbunden sind, wobei die Zwischenschicht (30) über mindestens einen der perimetralen Ränder des flachen Elements hinaus verlängert ist und über einem Abschnitt (31) von geeigneter Länge einwärts gefaltet ist, **dadurch gekennzeichnet, dass** es Vorrichtungen (40; 140; 240; 340) zum Greifen des gefalteten Abschnitts (31) der Zwischenschicht (30) umfasst und dass die Vorrichtungen zum Greifen relativ zu der äusseren Glasoberfläche der äusseren Platte (10) innen liegen.

2. Flaches Element nach Anspruch 1, **dadurch gekennzeichnet, dass** die Zwischenschicht aus Polymermaterial besteht.

3. Flaches Element nach Anspruch 1, **dadurch gekennzeichnet, dass** die Zwischenschicht (30) über mindestens zwei perimetrale Ränder des flachen Elements hinaus verlängert ist.

4. Flaches Element nach Anspruch 3, **dadurch gekennzeichnet, dass** die zwei perimetralen Ränder einander gegenüberliegend sind.

5. Flaches Element nach Anspruch 3, **dadurch gekennzeichnet, dass** die zwei perimetralen Ränder aneinander angrenzend sind.

6. Flaches Element nach Anspruch 1, **dadurch gekennzeichnet, dass** die innere Platte (20) eine Abmessung hat, die mindestens in der Position in der die Zwischenschicht (30) verlängert und gefaltet ist kleiner als die der äusseren Platte (10) ist.

7. Flaches Element nach Anspruch 1, **dadurch gekennzeichnet, dass** die innere Platte (20) Unterbrechungen hat, die dazu geeignet sind, ein Durchgehen und Falten der Zwischenschicht (30) zu ermöglichen.

8. Flaches Element nach Anspruch 1, **dadurch gekennzeichnet, dass** der verlängerte oder gefaltete Abschnitt (31) der Zwischenschicht (30) mit einem Winkel zwischen 20° und 130° einwärts gefaltet ist.

9. Flaches Element nach Anspruch 8, **dadurch gekennzeichnet, dass** der Biegungswinkel vorzugsweise zwischen 80° und 105° beträgt.

10. Flaches Element nach Anspruch 1, **dadurch gekennzeichnet, dass** der minimale Biegeradius des verlängerten und gefalteten Abschnitts (31) 1.5 mm beträgt.

11. Flaches Element nach Anspruch 10, **dadurch gekennzeichnet, dass** der Biegeradius vorzugsweise zwischen 4 und 20 mm beträgt.

12. Flaches Element nach Anspruch 1, **dadurch gekennzeichnet, dass** die Greifvorrichtungen (40; 140; 240; 340) aus einem Paar Backen (41,42; 141,142; 241,242a,242b; 241,442b; 241,341,342) bestehen, wovon mindestens eine sich bis zu dem flachen Element erstreckt.

13. Flaches Element nach Anspruch 12, **dadurch gekennzeichnet, dass** die sich bis zum dem flachen Element erstreckende Backe (41; 141) einen konvexen Abschnitt (41a) mit einer Krümmung hat, die der (32) des vorstehenden Abschnitts (31) der Zwischenschicht (30) entspricht.

14. Flaches Element nach Anspruch 12, **dadurch gekennzeichnet, dass** eine (42) der zwei Backen (41,42) des Paars Abmessungen hat, die kleiner als die der ersten Backe (41) sind.

15. Flaches Element nach Anspruch 12, **dadurch gekennzeichnet, dass** die sich bis zum flachen Element erstreckende Backe (41; 141) einen ersten Sitz (241a) zur Aufnahme der zweiten inneren Glasplatte (20) und, auf der gegenüberliegenden Seite, einen zweiten Sitz (241 b) hat, der für einen Eingriff in die zweite Backe (242a) geeignet ist, um die Zwischenschicht (30) des geschichteten Glases festzuklemmen.

16. Flaches Element nach Anspruch 15, **dadurch gekennzeichnet, dass** die zweite Backe (242a) mit einer gerundeten Form über den Rand der ersten Backe hinaus verlängert ist.

17. Flaches Element nach Anspruch 15, **dadurch gekennzeichnet, dass** die zweite Backe (242b) eine Länge hat, die im Wesentlichen gleich wie diejenige der ersten Backe (241) ist.

18. Flaches Element nach Anspruch 12, **dadurch gekennzeichnet, dass** die zweite Backe (142) des Paars in Richtung des flachen Elements verlängert ist und einen konkaven Sitz (142a) für die Anpassung an die Biegung (32) des vorstehenden Abschnitts (31) der Zwischenschicht (30) hat.

19. Flaches Element nach Anspruch 12, **dadurch gekennzeichnet, dass** die zweite Backe (442b) des Paars hat die Form eines L hat.

20. Flaches Element nach Anspruch 19, **dadurch gekennzeichnet, dass** der lange Arm des L sich so ausdehnt, dass der kurze Arm innerhalb eines geeigneten Sitzes (10a) der Platte (10) angeordnet ist.

21. Flaches Element nach Anspruch 19, **dadurch gekennzeichnet, dass** der lange Arm des L sich so ausdehnt, dass der kurze Arm jenseits der Platte (10) angeordnet ist.

22. Flaches Element nach Anspruch 12, **dadurch gekennzeichnet, dass** die zweite Backe (142) sich so in Richtung des flachen Elements ausdehnt, dass ein Spalt gebildet wird, in dem eine Dichtung (50) untergebracht ist.

23. Flaches Element nach Anspruch 1, **dadurch gekennzeichnet, dass** die Greifelemente Durchgangslöcher haben, die dazu geeignet sind, in entsprechende Mittel (3,3a; 103,103a) zum Einspannen der entsprechenden festen Stützteile einzugreifen.

24. Flaches Element nach Anspruch 23, **dadurch gekennzeichnet, dass** die Durchgangslöcher in der ersten Backe des Paars angeordnet sind.

25. Flaches Element entsprechend 23, **dadurch gekennzeichnet, dass** die Einspannmittel aus einem Bolzen (3) und aus einer Mutter (3a) bestehen.

26. Flaches Element nach Anspruch 23, **dadurch gekennzeichnet, dass** die Einspannmittel aus einem ersten Bolzen (103a) mit einem Gewinde auf seinem Schaft und einem Innengewinde bestehen, das zur Verbindung mit dem Gewindeschaft eines gegenüber dem ersten Bolzen angeordneten zweiten Bolzens (103) geeignet ist.

27. Flaches Element nach Anspruch 26, **dadurch gekennzeichnet, dass** das Gewinde zur Verbindung mit dem Innengewinde (102b) eines Einsatzes (102a) geeignet ist, der in die festen Mittel (102) zum Unterstützen des flachen Elements integriert ist.

28. Flaches Element nach Anspruch 24, **dadurch gekennzeichnet, dass** das Durchgangsloch (345) in der Längsrichtung gegen die Stützstruktur offen ist und mit entsprechenden Mitteln (345a) zum Schießen der Öffnung verbunden ist.

29. Flaches Element nach Anspruch 1, **dadurch gekennzeichnet, dass** die Verbindung zwischen dem verlängerten und gefalteten Abschnitt (31) der Zwischenschicht (30) und den Greifmitteln (40) mittels Adhäsion des Ersteren an die Letzteren erfolgt.

30. Flaches Element nach Anspruch 1, **dadurch gekennzeichnet, dass** Platten (10,20) transparent sind.

31. Flaches Element nach Anspruch 1, **dadurch gekennzeichnet, dass** mindestens eine der Platten (10,20) opak ist.

32. Verwendung des flachen Elements nach Anspruch 1 als Deckelement für Oberflächen von Gebäuden.

## Revendications

1. Élément plat stratifié comprenant une feuille externe (10) et une feuille interne (20) reliées l'une à l'autre par l'intermédiaire d'une couche intermédiaire (30), ladite couche intermédiaire (30) faisant saillie au-delà d'au moins un des bords périmétriques de l'élément plat et étant repliée vers l'intérieur sur une section (31) de longueur appropriée, **caractérisé en ce qu'**il comprend des dispositifs (40; 140; 240; 340) destinés à saisir la section replié (31) de la couche intermédiaire (30) et **en ce que** lesdits dispositifs de saisie se trouvent à l'intérieur par rapport à la surface de verre externe de ladite feuille externe (10).

2. Élément plat selon la revendication 1, **caractérisé en ce que** ladite couche intermédiaire se compose d'un matériau polymère.

3. Élément plat selon la revendication 1, **caractérisé en ce que** ladite couche intermédiaire (30) fait saillie au-delà d'au moins deux bords périmétriques de l'élément plat.

4. Élément plat selon la revendication 3, **caractérisé en ce que** lesdits deux bords périmétriques sont opposés l'un à l'autre.

5. Élément plat selon la revendication 3, **caractérisé en ce que** lesdits deux bords périmétriques sont adjacents l'un à l'autre.

6. Élément plat selon la revendication 1, **caractérisé en ce que** la feuille interne (20) présente une dimension inférieure à celle de la feuille externe (10) au moins à l'endroit où la couche intermédiaire (30) fait saillie et est repliée.

7. Élément plat selon la revendication 1, **caractérisé en ce que** la feuille interne (20) comporte des interruptions pouvant permettre le passage et le repliage de la couche intermédiaire (30).

8. Élément plat selon la revendication 1, **caractérisé en ce que** ladite section en saillie et repliée (31) de la couche intermédiaire (30) est repliée vers l'intérieur, à un angle compris entre 20 et 130.

9. Élément plat selon la revendication 8, **caractérisé en ce que** ledit angle de courbure est de préférence compris entre 80 et 105.

10. Élément plat selon la revendication 1, **caractérisé en ce que** le rayon de courbure minimal de la section en saillie et repliée (31) mesure 1,5 mm.

11. Élément plat selon la revendication 10, **caractérisé en ce que** le rayon de courbure est de préférence compris entre 4 et 20 mm.

12. Élément plat selon la revendication 1, **caractérisé en ce que** lesdits dispositifs de saisie (40; 140; 240; 340) se composent d'une paire de mâchoires (41, 42; 141, 142, 142; 241, 242a, 242b; 241, 442b;241, 341, 342) dont au moins une s'étend aussi loin que l'élément plat.

13. Élément plat selon la revendication 12, **caractérisé en ce que** ladite mâchoire (41; 141) s'étendant aussi loin que l'élément plat présente une section convexe (41 a) ayant une courbure correspondant à celle (32) de la section en saillie (31) de la couche intermédiaire (30).

14. Élément plat selon la revendication 12, **caractérisé en ce que** l'une (42) des deux mâchoires (41, 42) de la paire présente des dimensions inférieures à celles de la première mâchoire (41).

15. Élément plat selon la revendication 12, **caractérisé en ce que** ladite mâchoire (41, 141) s'étendant aussi loin que l'élément plat comporte un premier siège (241 a) destiné à recevoir la deuxième feuille interne de verre (20) et, du côté opposé, un deuxième siège (241 b) approprié pour coopérer avec la deuxième mâchoire (242a) afin de pincer la couche intermédiaire (30) du verre stratifié.

16. Élément plat selon la revendication 15, **caractérisé en ce que** la deuxième mâchoire (242a) s'étend avec une forme arrondie au-delà du bord de la première mâchoire.

17. Élément plat selon la revendication 15, **caractérisé en ce que** la deuxième mâchoire (242b) présente une longueur essentiellement identique à celle de la première mâchoire (241).

18. Élément plat selon la revendication 12, **caractérisé en ce que** la deuxième mâchoire (142) de la paire s'étend vers l'élément plat et comporte un siège concave (142a) destiné à s'adapter à ladite courbure (32) de la section en saillie (31) de la couche intermédiaire (30).

19. Élément plat selon la revendication 12, **caractérisé en ce que** la deuxième mâchoire (442b) de la paire a la forme d'un L.

20. Élément plat selon la revendication 19, **caractérisé en ce que** le bras long du L s'étend de telle sorte que le bras court soit disposé à l'intérieur d'un siège approprié (10a) de la feuille (10).

21. Élément plat selon la revendication 19, **caractérisé en ce que** le bras long du L s'étend de telle sorte que le bras court soit disposé au-delà de la feuille (10).

22. Élément plat selon la revendication 12, **caractérisé en ce que** la deuxième mâchoire (142) s'étend vers l'élément plat de façon à former un espace à l'intérieur duquel est logé un joint (50).

23. Élément plat selon la revendication 1, **caractérisé en ce que** lesdits dispositifs de saisie comportent des trous traversants appropriés pour coopérer avec des moyens correspondants (3, 3a; 103, 103a) permettant un ancrage à des parties de support fixes correspondantes.

24. Élément plat selon la revendication 23, **caractérisé en ce que** lesdits trous traversants sont formés sur la première mâchoire de la paire.

25. Élément plat selon la revendication 23, **caractérisé en ce que** lesdits moyens d'ancrage se composent d'une vis (3) et d'un écrou (3a).

26. Élément plat selon la revendication 23, **caractérisé en ce que** lesdits moyens d'ancrage se composent d'une première vis (103a) sur la tige de laquelle sont formés des filetages mâle et femelle appropriés pour coopérer avec la tige filetée d'une deuxième vis (103), située en face de la première vis.

27. Élément plat selon la revendication 26, **caractérisé en ce que** ledit filetage mâle est approprié pour coopérer avec le filetage femelle (102b) d'une pièce d'insertion (102a) solidaire des moyens fixes (102) destinés à supporter l'élément plat.

28. Élément plat selon la revendication 24, **caractérisé en ce que** ledit trou traversant (345) est ouvert dans le sens longitudinal vers la structure de support et est associé à des moyens correspondants (345a) destinés à fermer l'ouverture.

29. Élément plat selon la revendication 1, **caractérisé en ce que** le joint situé entre la section en saillie et repliée (31) de la couche intermédiaire (30) et lesdits dispositifs de saisie (40) est réalisé par adhérence de la première sur les derniers.

30. Élément plat selon la revendication 1, **caractérisé en ce que** lesdites feuilles (10, 20) sont transparentes.

31. Élément plat selon la revendication 1, **caractérisé en ce qu'**au moins une desdites feuilles (10, 20) est opaque.

32. Utilisation de l'élément plat selon la revendication 1 en tant que revêtement pour des surfaces de bâtiments.
